# EUROPEAN PATENT SPECIFICATION

(11) **EP 0 329 881 B1**
(45) Date of publication and mention of the grant of the patent: **15.12.1993**
(21) Application number: 88303617.0
(22) Date of filing: 21.04.1988
(51) Int. Cl.: B65D 23/06, B65D 25/42

(54) **Self-draining container**
Behälter mit Tropfenrückfluss
Récipient à reflux des gouttes

(30) Priority: 25.02.1988 US 160478
(43) Date of publication of application: 30.08.1989
(73) Proprietor: OWENS-ILLINOIS PLASTIC PRODUCTS INC., Toledo, Ohio 43666 (US)
(72) Inventor: Krall, Thomas J., Toledo Ohio (US)
(74) Representative: Votier, Sidney David

(56) References cited:
- GB-A- 678 883
- GB-A- 2 094 220
- US-A- 4 550 862
- US-A- 4 616 759
- US-A- 4 640 855

## Description

### Background of the Invention

Self-draining containers are known in the art. These containers include means for returning contents which have dripped or run down the exterior of the pouring spout during use to the main body of the container.

Examples of prior art self-draining closures are shown in US-A-4,550,862 and US-A-4,640,855.

One of the primary problems with prior art self-draining containers is that they include multiple parts. In addition, prior art self-draining containers often require intermediate or post assembly steps to accomplish the self-draining feature.

### Summary of the Invention

According to this invention a unitary self-draining plastic container is made by a process in which
there is formed by injection moulding
(i) an upwards extending dispensing spout;
(ii) a web extending radially outwards from the lower end of the dispensing spout and substantially perpendicular to the longitudinal axis of the spout; and,
(iii) a cylindrical wall spaced radially outwards of and encircling the dispensing spout formed *in situ* and cooperating with the dispensing spout and the web to define a channel into which liquid draining down the outside of the dispensing spout may be captured, the cylindrical wall having a predetermined diameter determining a cross-sectional size and having integrally moulded closure retention means on the interior surface thereof; and means e.g. an aperture, providing communication between the interior of the body portion and the channel.

Thereafter, according to the process of the invention there is formed by blow moulding a body portion integral and *in situ* with and depending from the lower portion of the cylindrical wall, the body portion flaring outwards from the lower end of the cylindrical wall to an area of enlarged cross-section size.

Preferably the web has a circumferential extent more than 180° but less than 360° and preferably the portion of the spout adjacent to the web has a circumferential extent more than 180° but less than 360°.

In a preferred embodiment of the invention a one-piece plastic container is formed by injection moulding a first portion, extruding a tubular parison depending from the first portion and expanding the tubular parison to form a body portion in which a self-draining container is formed by
providing a cavity in an injection mould defining
(i) a spout forming portion,
(ii) a cylindrical wall forming portion having an outer surface and an inner surface including a thread forming projection; and,
(iii) a web forming portion interconnecting the spout forming portion and cylindrical wall forming portion, each of the portions opening to the exterior of the mould.

Relative movement is therefore imparted between an extrusion die head for extruding heated and plasticized plastic material and the injection mould to engage the injection mould and the die head to close the cavity. Plastic material is injected from the die head into the cavity to fill the cavity to form a pouring spout, cylindrical wall and integral web interconnecting the spout and the cylindrical wall
Thereafter relative movement is imparted between the die head and the injection mould while extruding plastic material in the form of tubing from the die head, the tubing having a diameter at least equal to the diameter of the cylindrical wall. The mould halves are closed about the extruded tubing; and
the tubing is expanded to form a self-draining plastic container having a closed bottom and the integral pouring spout, web and cylindrical wall.

The self-draining container, according to the process of present invention, is a single integral unit which does not include multiple parts to be assembled subsequent to forming except for application of a cap or closure to seal the package. The container is completed upon molding and post-molding operations are not required.

The container includes a body portion which terminates in an opening through which the contents can be dispensed. An integrally formed dispensing portion extends from and communicates with the body portion. The dispensing portion includes a collar or wall which extends around the body opening. An integral dispensing spout is located within and encircled by the collar. The upper end of the dispensing spout extends above the top of the collar. A web portion extends between the collar and the dispensing spout. The exterior of the spout, the web and the collar define a channel into which fluid may be received when the container is inverted. A drain opening is provided in or adjacent to the bottom of the channel through which the fluid in the channel may drain back into the body of the container when the container is uprighted.

### Description of the Drawings

Fig. 1 is a perspective view showing a container, according to the present invention, with a cap positioned above the container;
Fig. 2 is a fragmentary view of the top part of the container with the cap in place;
Fig. 3 is an enlarged section view of the upper part of the container shown in Fig. 1;
Fig. 4 is a fragmentary view of another embodiment of a container, according to the present invention;
Fig. 5 is a fragmentary view, partially in cross section, showing the finish portion of a container according to the present invention, being formed in a molding machine; and
Fig. 6 is a fragmentary view, similar to Fig. 5 showing the finish portion of the Fig. 4 container embodiment being formed in a molding machine.

### Description of the Preferred Embodiments

A self-draining container, made according to the process of the present invention, is generally indicated by the reference number 10. While the self-draining container 10, depicted in the drawings, is a plastic bottle specifically designed for liquids, other self-draining containers made by the process of this invention may be constructed of other materials and used to contain liquids, powders or granules.

The self-draining container 10 includes a body portion 11 which terminates in an opening 12 through which the contents of the container 10 can be dispersed.

An integrally formed dispensing portion 14 extends from and communicates with the body portion 11. The dispensing portion 14 includes a circular wall 15 which extends annularly around the body opening 12. A dispensing spout 16 is located within and is encircled by the wall 15. The dispensing spout 16 includes an upper end 17 which extends above a top 18 of the wall 15.

A connecting web 20 extends between the wall 15 from an elevation below the top 18 to the dispensing spout 16. The web 20 connects the wall 15 and the dispensing spout 16 and cooperates with the wall 15 and the dispensing spout 16 to define a channel 21 into which fluid flowing from the exterior of the dispensing spout 16 may drain when the container 10 is uprighted after it has been inverted for pouring. The web 20 extends at least halfway around the dispensing spout 16 to prevent flow of liquid into the channel 21 when the container 10 is partially inverted to a pouring position.

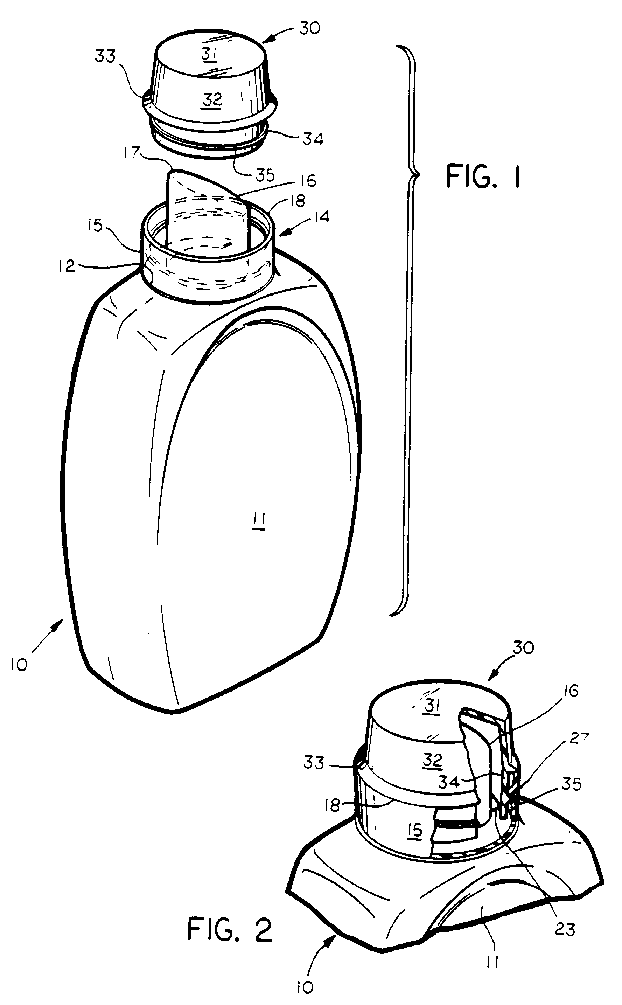

A drain opening 23 is provided adjacent the channel 21. Fluid which is received in the channel 21 may drain back into the body 11 of the container 10 after the container is uprighted subsequent to pouring. In the embodiment shown in Figs. 1-3, the drain opening 23 is defined by both the dispensing spout 16 and the web 20. However, in other embodiments, the channel 21 may be continuous having only a step portion with the drain being defined solely by the dispensing spout (not shown).

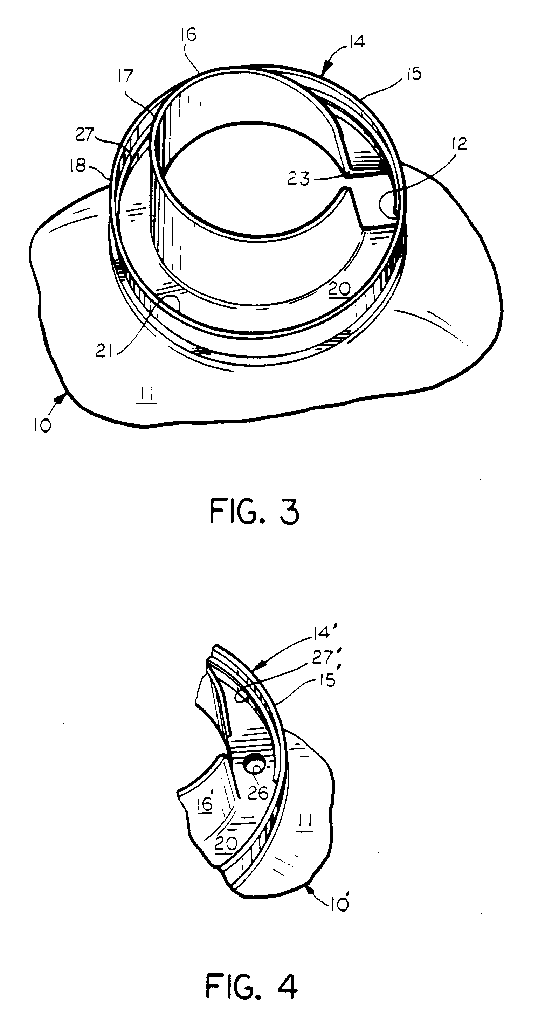

Another embodiment of the process of this invention is shown in Fig. 4. In this embodiment, a drain opening 26 comprises a circular hole which extends through the web 20'. In both embodiments, shown in Figs. 3 and 4, the drain opening 23 or the drain opening 26 is in an opposed relationship to the upper end 17 of the dispensing spout 16 or 16'.

Threads 27 are formed on the inside of the circular wall 15. Similarly, threads 27' are formed on the inside wall 15' of the Fig. 4 embodiment. Referring to Fig. 1, a closure or cap 30 includes a top 31 and a depending sidewall 32. A sealing ring 33 extends radially outwardly from the sidewall 32 and a cylindrical skirt 34 depends downwardly below the ring 33. External threads 35 are formed on the exterior surface of the skirt 34 and cooperate with the threads 27 defined on the interior wall 15 of the container 10.

It is understood that in other embodiments of the present invention, the threads may be located on the exterior wall and mate with cap threads located on the interior of the cap.

Fig. 1 shows the cap 30 removed, while Fig. 2 shows the cap 30 in position on the container 10. When in the closed position, as shown in Fig. 2, the sealing ring 33 of the cap 30 engages the top 18 of the wall 15 of the container 10 to provide a proper seal.

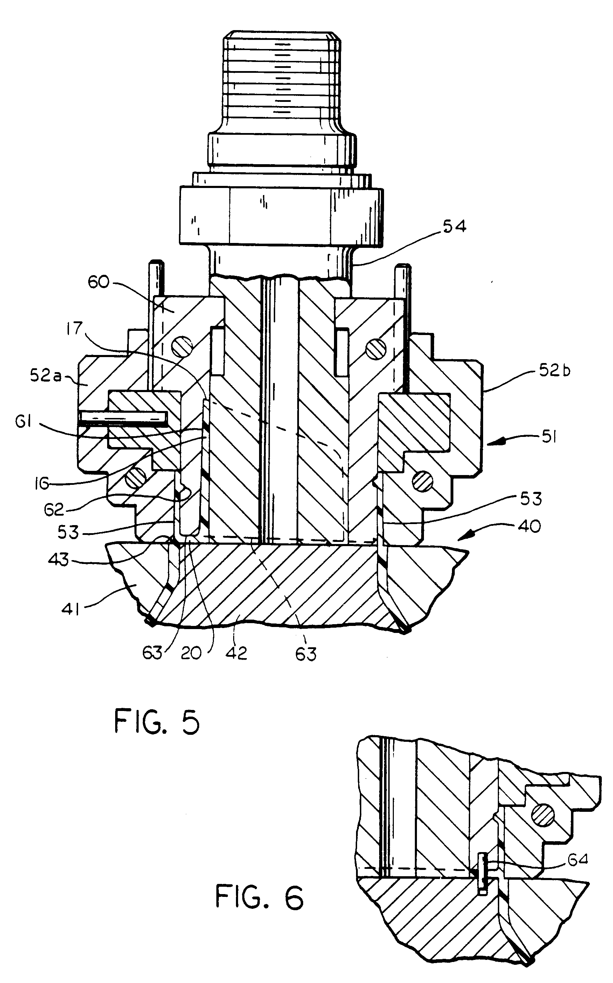

Referring to Fig. 5, the self-draining container 10 may be produced within the normal cycle of a blow molding machine of a type used by the assignee of the present invention known as a BC-3 machine. No post-molding operations are needed to produce the desired self-draining finish on this type of machine. A portion of a BC-3 machine is generally indicated by the reference number 40. Details of a BC-3 machine method are disclosed in Sherman U.S.-A-2,804,654, which is incorporated herein by reference. This type of blow molding may be characterized as injection-extrusion blow molding and is used by the assignee of the present invention and others with a machine designated as a BC-3 machine.

In the method utilized by the BC-3 machine, the upper neck or finish portion of the container is first injection molded in an injection mold. Upon completion of the injection molding step, the injection mold is raised from the orifice of the injection die head while a length of heated and plasticized tubing is extruded from the die head. The tubing is connected to the injection molded finish and is drawn upwardly as the tubing is extruded. After the proper length of tubing has been extruded, blow mold halves close around the tubing and air is introduced through the injection mold assembly to expand the tubing in the closed mold to form the remainder of the container. These steps are shown as described in U.S. Patent 2,804,654.

In Fig. 5 the extrusion die is designated by the numeral 40 and includes a bushing 41 and mandrel 42 which cooperate to define an orifice 43 through which the heated and plasticized material is expelled. Also shown is a moveable neck ring assembly 51 which is mounted (by means not shown) for movement downwardly into engagement with the orifice 43 during the injection molding step and for movement upwardly during the extrusion step to draw the oncoming tubing away from the orifice 43. The neck ring assembly 51 includes neck ring halves 52a and 52b which can open and close radially and which have interior wall portions 53 against which the exterior surface of the annular wall 15 of the container is molded. Also included is a core pin 54 having a passageway extending longitudinally therethrough through which pressurized air may be introduced into the extruded tubing after such tubing is enclosed within the blow mold to thereby expand the tube in the blow mold and form the body of the container. The core pin 54 forms the interior surface of the spout 16 of the container.

A sleeve 60 encircles the core pin 54 and has a recess 61 of a configuration to form the upper end 17 and outer surface of the spout 16. The lower exterior portion of the sleeve 60 forms the interior surface of the annular wall 15 and has a thread recess 62 in which the threads 27 are molded. The lower end 63 of the sleeve 60 is angled such that during the injection molding step it is spaced from the mandrel for a major portion around its circumference to cooperate therewith to form the web 20 as shown at the left in Fig. 5 but is in contact with the mandrel for a minor portion as shown at the right in Fig. 5 to form the drain opening 23 (see Fig. 3) without the necessity of a post-forming operation.

Similarly, referring to Fig. 6, a BC-3 machine may have a pin 64 mounted on the lower end of the sleeve 60 to form the drain opening 26 (see Fig. 4) of the self-draining container 10'. Again, the self-draining container 10' may be manufactured on a BC-3 machine without the necessity of post-forming operations on the bottle finish.

Many revisions and changes may be made to the various elements of the preferred embodiments of the self-raining containers described above without departing from the scope of the following claims.

## Claims

1. A process for making a unitary self-draining plastic container in which
(a) there is formed by injection moulding
(i) an upwards extending dispensing spout (16);
(ii) a web (20) extending radially outwards from the lower end of said dispensing spout and substantially perpendicular to the longitudinal axis of the spout (16); and,
(iii) a cylindrical wall (15) spaced radially outwards of and encircling said dispensing spout formed *in situ* and cooperating with said dispensing spout (16) and said web (20) to define a channel (21) into which liquid draining down the outside of said dispensing spout may be captured, said cylindrical wall (15) having a predetermined diameter determining a cross-sectional size and having integrally moulded closure retention means (27) on the interior surface thereof; and means (23, 26) providing communication between the interior of said body portion and said channel; and,
(b) there is formed by blow moulding a body portion (11) integral and *in situ* with and depending from the lower portion of said cylindrical wall (15), said body portion (11) flaring outwards from the lower end of said cylindrical wall (15) to an area of enlarged cross-section size.

2. A process according to claim 1, wherein the means for communication between said body portion and said channel is an aperture (26) formed during injection moulding.

3. A process according to claim 1 wherein said web has a circumferential extent more than 180° but less than 360°.

4. A process according to claim 1 wherein the portion of said spout adjacent to said web has a circumferential extent more than 180° but less than 360°.

5. The process of forming a one-piece plastic container by injection moulding a first portion, extruding a tubular parison depending from said first portion and expanding said tubular parison to form a body portion (11) in which a self-draining container is formed by
(a) providing a cavity in an injection mould (51) defining
(i) a spout forming portion (61),
(ii) a cylindrical wall forming portion having an outer surface (53) and an inner surface including a thread forming projection (62); and,
(iii) a web forming portion (42, 63) interconnecting the spout forming portion (61) and cylindrical wall forming portion (53), each of said portions opening to the exterior of said mould;
(b) imparting relative movement between an extrusion die head (40) for extruding heated and plasticized plastic material and said injection mould (51) to engage said injection mould and said die head to close said cavity;
(c) injecting plastic material from said die head into said cavity to fill said cavity to form a pouring spout (16), cylindrical wall (15) and integral web (20) interconnecting said spout and said cylindrical wall;
(d) imparting relative movement between said die head (40) and said injection mould (51) while extruding plastic material in the form of tubing from said die head (40), said tubing having a diameter at least equal to the diameter of said cylindrical wall;
(e) closing mould halves about the extruded tubing; and
(f) expanding the tubing to form a self-draining plastic container (10) having a closed bottom and said integral pouring spout (16), web (20) and cylindrical wall (15).

## Patentansprüche

1. Verfahren zur Herstellung eines einheitlichen Behälters mit Tropfenrückfluß, mit folgenden Maßnahmen:
a) durch Spritzgießen wird folgendes geformt:
i) ein sich nach oben erstreckender Abgabeausguß (16);
ii) eine Stegwand (20), die sich radial vom unteren Ende des Abgabeausgusses nach außen und im wesentlichen senkrecht zur Längsache des Ausgusses (16) erstreckt; sowie
iii) eine zylindrische Wand (15), die den Abgabeausguß mit radialem Abstand außen umgibt, an Ort und Stelle hergestellt ist und mit dem Abgabeausguß (16) und der Stegwand (20) zur Bildung eines Kanals (21) zusammenarbeitet, in dem an der Außenseite des Abgabeausgusses herabtropfende Flüßigkeit gefangen werden kann, wobei die zylindrische Wand (15) einen vorbestimmten Durchmesser aufweist, der eine Querschnittsgröße bestimmt und an der Innenseite eine einstückig angegoßene Verschlußrückhalte-Einrichtung (27) besitzt;
ferner ist eine Einrichtung (23,26) vorgesehen, die eine Verbindung zwischen dem Inneren des Körperteils und dem Kanal schafft;
b) durch Blasgießen wird ein Körperteil (11) gebildet, der einstückig und von dem unteren Teil der zylindrischen Wand (15) nach unten reichend mit dieser hergestellt wird, wobei der Körperteil (11) nach außen vom unteren Ende der zylindrischen Wand (15) bis zu einem Bereich vergrößerter Querschnittsgröße sich ausdehnt.

2. Verfahren nach Anspruch 1,
dadurch gekennzeichnet, daß die Einrichtung zur Verbindung zwischen dem Körperteil und dem Kanal eine Öffnung (26) darstellt, die während des Spritzgießens gebildet wird.

3. Verfahren nach Anspruch 1,
dadurch gekennzeichnet, daß die Stegwand eine Umfangsausdehnung größer als 180°, aber weniger als 360° umfaßt.

4. Verfahren nach Anspruch 1,
dadurch gekennzeichnet, daß der Teil des Ausgusses, benachbart der Stegwand, eine Umfangsausdehnung mehr als 180°, aber weniger als 360° aufweist.

5. Verfahren zur Bildung eines einstückigen Kunststoffbehälters durch Spritzgießen eines ersten Teils, Extrudieren einer vom ersten Teil nach unten reichenden rohrförmigen Wand und Expandieren der rohrförmigen Wand zur Bildung eines Körperteils (11), wobei ein Behälter mit Tropfenrückfluß wie folgt geformt wird:
a) ein Hohlraum wird in einer Spritzgießform (51) zur Begrenzung folgender Teile vorgesehen:
i) ein Ausgußbildungsteil (61),
ii) ein zylindrischer Wandbildungteil mit einer Außenfläche (53) und einer Innenfläche einschließlich einem Schraubbildungsvorsprung (62); und
iii) ein Stegwandbildungsteil (42,63), der den Ausgußbildungsteil (61) und den zylindrischen Wandbildungsteil (53) miteinander verbindet, wobei diese Teile sich zum Äußeren der Gießform öffnen;
b) zwischen einem Extrusionsspritzkopf (40) zum Extrudieren erhitzten und plastifizierten Kunststoffmaterials und der Spritzgießform (51) erfolgt eine relative Verschiebung, um die Gießform und den Spritzkopf zum Schließen des Hohlraums ineinandergreifen zu lassen;
c) Kunststoffmaterial wird von dem Spritzkopf in den Hohlraum gespritzt, um den Hohlraum zu füllen und einen Abgabeausguß (16), eine zylindrische Wand (15) und eine einstückige Stegwand (20) zu bilden, welche den Ausguß und die zylindrische Wand verbindet;
d) zwischen dem Spritzkopf (40) und der Spritzform (51) wird eine relative Verschiebung erzeugt, während Kunststoffmaterial in der Form eines Rohres von dem Spritzkopf (40) extrudiert wird, wobei das Rohr einen Durchmesser mindestens gleich dem Durchmesser der zylindrischen Wand aufweist;
e) Gießformhälften werden um das extrudierte Rohr geschlossen; und
f) das Rohr wird zur Bildung eines Kunststoffbehälters (10) mit Tropfenrückfluß und einem geschlossenen Boden sowie dem einstückigen Abgabeausguß (16), der Stegwand (20) und der zylindrischen Wand (15) expandiert.

## Revendications

1. Procédé pour fabriquer un récipient en matière plastique, monobloc et à auto-assèchement du goulot dans lequel :
(a) on forme par moulage par injection :
(i) un bec verseur (16) s'étendant vers le haut ;
(ii) une cloison (20) s'étendant radialement vers l'extérieur depuis l'extrémité inférieure dudit bec verseur et de façon sensiblement perpendiculaire à l'axe longitudinal du bec (16); et
(iii) une paroi cylindrique (15) espacée radialement vers l'extérieur et entourant ledit bec verseur formé in situ et coopérant avec ledit bec verseur (16) et ladite cloison (20) de manière à définir une rigole (21) dans laquelle le liquide s'écoulant vers le bas sur l'extérieur dudit bec verseur peut être capté, ladite paroi cylindrique (15) ayant un diamètre prédéterminé définissant une dimension de section transversale et comportant un moyen (27) de retenue de couvercle, venu de moulage, sur la surface intérieure de cette paroi; et un moyen (23, 26) assurant une communication entre l'intérieur de ladite partie corps et ladite rigole; et
(b) on forme par moulage au soufflé une partie corps (11) de façon intégrée avec la partie inférieure de ladite paroi cylindrique (15), cela in situ et de façon à s'étendre vers le bas depuis cette partie inférieure, ladite partie corps (11) s'évasant vers l'extérieur depuis l'extrémité inférieure de ladite paroi cylindrique (15) jusque dans une zone de dimension de section transversale plus grande.

2. Procédé selon la revendication 1, dans lequel le moyen établissant une communication entre ladite partie corps et ladite rigole est une ouverture (26) formée pendant le moulage par injection.

3. Procédé selon la revendication 1, dans lequel ladite cloison s'étend circonférentiellement sur plus de 180° mais sur moins de 360°.

4. Procédé selon la revendication 1, dans lequel la partie dudit bec adjacente à ladite collerette s'étend circonférentiellement sur plus de 180° mais moins de 360°.

5. procédé pour fabriquer un récipient en plastique d'une seule pièce par moulage par injection d'une première partie, extrusion d'une paraison tubulaire s'étendant vers le bas depuis ladite première partie et l'expansion de ladite paraison tubulaire pour former une partie corps (11), procédé dans lequel on forme un récipient à auto-assèchement du goulot en :
(a) ménageant une cavité dans un moule à injection (51) définissant
(i) une partie (61), de formation de bec verseur,
(ii) une partie de formation de paroi cylindrique comportant une surface extérieure (53) et une surface intérieure comprenant une saillie (62) de formation de filetage; et
(iii) une partie (42, 63) de formation de cloison, reliant mutuellement la partie (61) de formation de bec verseur et la partie (53) de formation de paroi cylindrique, chacune desdites parties débouchant vers l'extérieur dudit moule;
(b) on communique un mouvement relatif entre une tête (40) de filière d'extrusion pour extruder une matière plastique chauffée et plastifiée et ledit moule (51) à injection, de manière à faire venir en contact ledit moule à injection et ladite tête de filière pour fermer ladite cavité;
(c) on injecte la matière plastique à partir de ladite tête de filière dans ladite cavité pour remplir cette cavité de manière à former un bec verseur (16), une paroi cylindrique (15) et une cloison intégrée (20) reliant mutuellement ledit bec et ladite paroi cylindrique;
(d) on communique un mouvement relatif entre la tête (40) de filière et le moule (51) à injection pendant que l'on extrude la matière plastique sous la forme d'un tube à partir de ladite tête (40) de filière, ledit tube ayant un diamètre au moins égal au diamètre de ladite paroi cylindrique ;
(e) on ferme les demi-moules autour du tube extrudé; et
(f) on expanse le tube de manière à former un récipient (10) en matière plastique à auto-assèchement du goulot, ce récipient comportant un fond fermé et ledit bec verseur intégré (16), ladite cloison (20) et ladite paroi cylindrique (15).
